# DEMANDE DE BREVET EUROPEEN

(11) **EP 4 520 155 A1**
(43) Date de publication de la demande: **12.03.2025**
(21) Numéro de dépôt: 24197839.4
(22) Date de dépôt: 02.09.2024
(51) Int. Cl.: A01C 7/04

(54) **DISPOSITIF DE DISTRIBUTION DE PRODUIT AGRICOLE AMÉLIORÉ**

(30) Priorité: 11.09.2023 FR 2309518
(71) Demandeur: Kuhn SAS, 67700 Saverne (FR)
(72) Inventeur: CONSTANT, Olivier, 67340 WEITERSWILLER (FR)

(57) **Abrégé**

Dispositif de distribution (1) de graines pour une machine agricole (2) avec un boitier (3), une arrivée de graines (4), un disque perforé (5) et entraîné pour transporter les graines et un tube de sortie (7), les graines étant transportées depuis une réserve (8) vers le tube de sortie (7) à l'aide d'une différence de pression d'air, la différence de pression d'air étant interrompue pour que les graines quittent le disque (5) pour rejoindre le tube de sortie (7), le tube de sortie (7) comprenant une première portion (9) dans laquelle rentrent les graines via une entrée (10), cette première portion (9) du tube de sortie (7) se trouvant à l'intérieur du boitier (3) et étant orientée de sorte que l'entrée (10) soit adjacente au disque ; le dispositif de distribution (1) comporte un élément de carénage (11) dans lequel est ménagée une première ouverture (21) s'étendant selon un premier plan de carénage (23) et l'élément de carénage (11) recouvre la première portion (9) du tube de sortie (7).

## Description

La présente invention concerne le domaine du machinisme agricole et notamment les semoirs agricoles.

L'invention porte plus spécifiquement sur un dispositif de distribution de graines, pour une machine agricole telle qu'un semoir monograine, le dispositif de distribution comprenant un boitier, une arrivée de graines aménagée dans le boitier, un disque perforé et entraîné pour transporter les graines le long d'un parcours circulaire, un tube de sortie transportant les graines depuis le boitier vers un sillon d'une parcelle agricole, les graines étant transportées depuis une réserve située dans le boitier vers le tube de sortie, à l'aide d'une différence de pression d'air de part et d'autre du disque, la différence de pression d'air étant interrompue dans une zone de sortie à proximité du tube de sortie, de façon à ce que les graines quittent le disque pour rejoindre le tube de sortie, le tube de sortie comprenant une première portion dans laquelle rentrent les graines via une entrée, cette première portion du tube de sortie se trouvant à l'intérieur du boitier et étant orientée de sorte que l'entrée soit adjacente au disque.

Un dispositif de distribution du type évoqué ci-dessus est connu du document EP 3329758 A1. Sur le dispositif de distribution de ce document, un tube est monté dans une chambre sous pression située à l'intérieur du boitier de distribution. L'entrée du tube est disposée à proximité du disque de distribution. La portion supérieure du tube comprend son entrée. Cette entrée du tube se trouve dans une zone où les flux de pression sont décisifs. La simple présence du tube dans la chambre peut perturber ces flux de pression de manière non-négligeable. La proéminence du tube dans la chambre génère des turbulences, ce qui ne permet pas de gérer les flux de manière optimale. Durant le fonctionnement, certaines graines n'atteignent ou n'entrent pas dans le tube en sortie de disque. Elles s'accumulent dans la chambre et ne sont donc pas déposées dans la terre. Ces graines restent coincées entre le tube et la chambre sous pression et perturbent la régularité de la distribution. Une détérioration des flux de pression conduit à une baisse de la régularité et donc de la qualité de semis.

La présente invention a pour but de réduire, voire de supprimer au moins un des inconvénients précités.

A cet effet, elle a pour objet un dispositif de distribution de graines pour une machine agricole telle qu'un semoir monograine, le dispositif de distribution comprenant un boitier, une arrivée de graines aménagée dans le boitier, un disque perforé et entraîné pour transporter les graines le long d'un parcours circulaire, un tube de sortie transportant les graines depuis le boitier vers un sillon d'une parcelle agricole, les graines étant transportées depuis une réserve située dans le boitier vers le tube de sortie à l'aide d'une différence de pression d'air de part et d'autre du disque, la différence de pression d'air étant interrompue dans une zone de sortie à proximité du tube de sortie, de façon à ce que les graines quittent le disque pour rejoindre le tube de sortie, le tube de sortie comprenant une première portion dans laquelle rentrent les graines via une entrée, cette première portion du tube de sortie se trouvant à l'intérieur du boitier et étant orientée de sorte que l'entrée soit adjacente au disque, caractérisé en ce que le dispositif de distribution comporte un élément de carénage dans lequel est ménagée une première ouverture s'étendant selon un premier plan de carénage, et en ce que l'élément de carénage recouvre au moins partiellement la première portion du tube de sortie. Grâce à l'élément de carénage au niveau du tube, les graines ne restent plus coincées dans des endroits défavorables dans le boitier. Elles retombent dans la réserve de graines lorsqu'elles n'entrent pas dans le tube en sortie de disque.

L'invention porte également sur une machine agricole comprenant ce dispositif de distribution.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
[Fig. 1] est une vue en perspective d'un dispositif de distribution selon le mode de réalisation préféré de l'invention,
[Fig. 2] est une vue en perspective selon une autre orientation du dispositif de distribution de la figure 1.
[Fig. 3] est une vue de face du dispositif de distribution de la figure 1 dans laquelle certains composants sont occultés.
[Fig. 4] est une vue de détail du dispositif de distribution de la figure 1 où certains composants sont occultés.
[Fig. 5A] est une vue de détail selon une autre orientation du dispositif de distribution de la figure 1 où certains composants sont occultés.
[Fig. 5B] est une vue de détail selon une autre orientation du dispositif de distribution de la figure 1 selon un autre mode de réalisation.
[Fig. 5C] est une vue de détail selon une autre orientation du dispositif de distribution de la figure 1 selon un autre mode de réalisation.
[Fig. 6] est une vue de détail du dispositif de distribution de la figure 1 où certains composants sont occultés.
[Fig. 7] est une vue de détail en coupe du dispositif de distribution de la figure 1 où certains composants sont occultés.
[Fig. 8] est une vue de détail en coupe selon une autre orientation du dispositif de distribution de la figure 1 où certains composants sont occultés.
[Fig. 9] est une vue d'un tube de sortie seul.
[Fig. 10] est une vue en coupe du tube de sortie seul de la figure 9.
[Fig. 11A] et [Fig. 11B] sont deux vues de détail d'un composant du dispositif de distribution de l'invention.
[Fig. 12] est une vue globale d'une machine agricole, ici un semoir monograine, pouvant comprendre au moins un dispositif de distribution selon l'invention.

L'invention concerne un dispositif de distribution (1) de graines, pour une machine agricole (2) telle qu'un semoir monograine, le dispositif de distribution (1) comprenant un boitier (3), une arrivée (4) de graines aménagée dans le boitier (3), un disque (5) perforé et entraîné pour transporter les graines le long d'un parcours circulaire, un tube de sortie (7) transportant les graines depuis le boitier (3) vers un sillon d'une parcelle agricole, les graines étant transportées depuis une réserve (8) située dans le boitier (3) vers le tube de sortie (7) à l'aide d'une différence de pression d'air de part et d'autre du disque (5), la différence de pression d'air étant interrompue dans une zone de sortie (18) à proximité du tube de sortie (7), de façon à ce que les graines quittent le disque (5) pour rejoindre le tube de sortie (7), le tube de sortie (7) comprenant une première portion (9) dans laquelle rentrent les graines via une entrée (10), cette première portion (9) du tube de sortie (7) se trouvant à l'intérieur du boitier (3) et étant orientée de sorte que l'entrée (10) soit adjacente au disque (5), caractérisé en ce que le dispositif de distribution (1) comporte un élément de carénage (11) dans lequel est ménagée une première ouverture (21) s'étendant selon un premier plan de carénage (23), et en ce que l'élément de carénage (11) recouvre au moins partiellement la première portion (9) du tube de sortie (7).

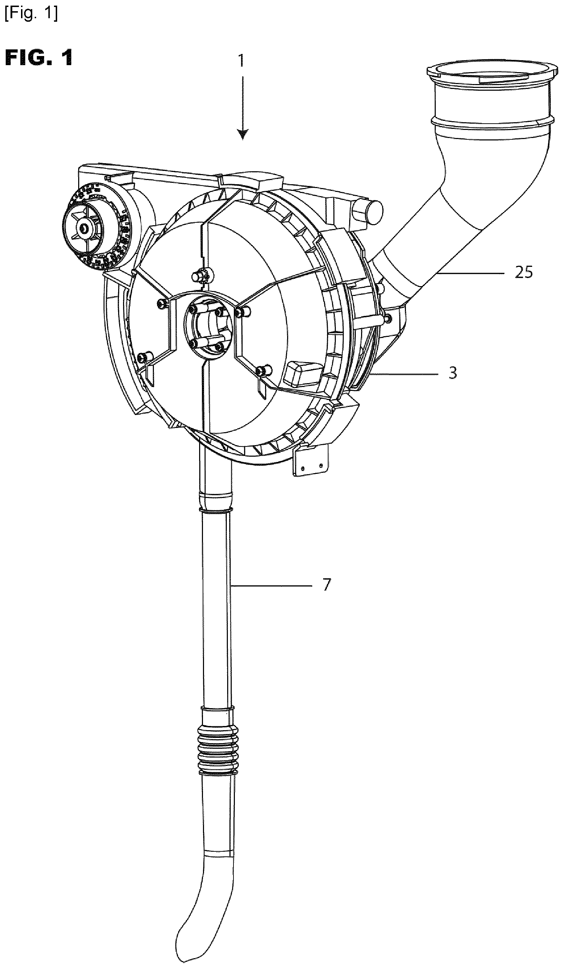

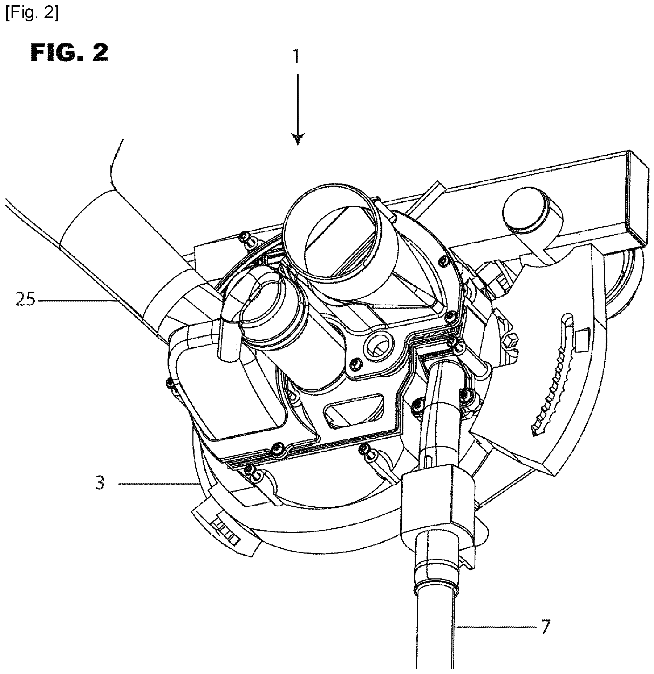

Tel que représenté sur les figures 1 et 2, le dispositif de distribution (1) comprend le boitier (3) auquel est relié le tube de sortie (7). Le tube de sortie (7) permet de transporter les graines dosées par le dispositif de distribution (1) vers un sillon d'une parcelle agricole de manière contrôlée et régulière.

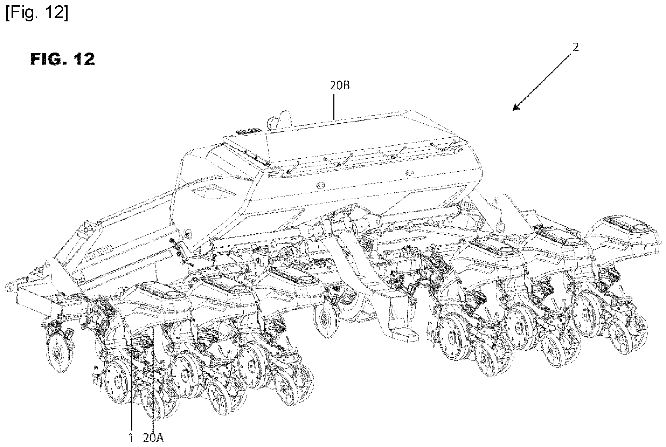

Les graines à doser à l'aide du dispositif de distribution (1) sont initialement stockées dans une trémie à graines (20A), visible sur la figure 12.

Il est également possible de doser d'autres produits agricoles particulaires que des graines avec le dispositif de distribution (1), par exemple de l'engrais granulaire.

L'alimentation en produit agricole à doser du dispositif de distribution (1) peut se faire via une trémie à graines (20A) située à proximité du dispositif de distribution (1), ou bien via une trémie à engrais (20B) distante du dispositif de distribution (1). Ces deux trémies (20A ; 20B) sont visibles sur la figure 12. Dans une variante non représentée, la trémie à graines (20A) est distante du dispositif de distribution (1). De même, dans une variante non représentée, la trémie à engrais (20B) est située à proximité du dispositif de distribution (1).

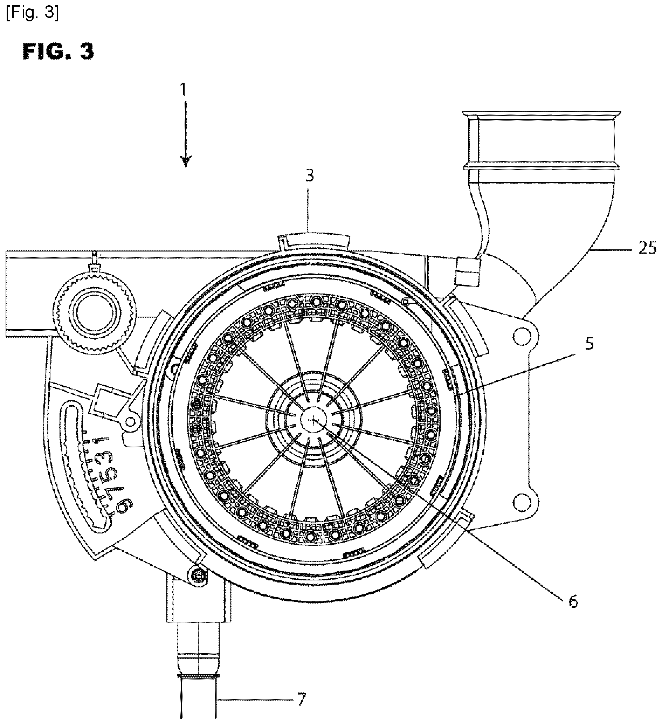

La figure 3 représente le boitier (3) du dispositif de distribution (1) sans son couvercle, et laissant apparaître le disque (5). Le disque (5) est monté et entraîné en rotation à l'intérieur du boitier (3) autour d'un axe de rotation (6) et permet de transporter les graines le long d'un parcours circulaire, à l'aide de perforations formant un cercle concentrique au disque (5). Les perforations s'étendent sur le pourtour du disque (5). Ainsi, chaque graine est sélectionnée par le disque (5) au niveau de la réserve (8) et est transportée vers le tube de sortie (7) grâce à une différence de pression entre les deux faces du disque (5).

Le boitier (3) est formé de deux parties démontables, une base de boitier et un couvercle. Le couvercle se fixe sur la base de boitier grâce à une rotation, par exemple d'un huitième de tour, dans des encoches. La rotation pour la fixation du couvercle se fait autour d'un axe (non représenté) parallèle ou confondu à l'axe de rotation (6) du disque (5). D'autres solutions de fixation verrouillables et démontables sont également envisageables, comme des vis quart-de-tour, ou des éléments de fixation de type grenouillère. L'accès aux éléments présents à l'intérieur du boitier, par exemple au disque (5) est possible grâce au couvercle démontable.

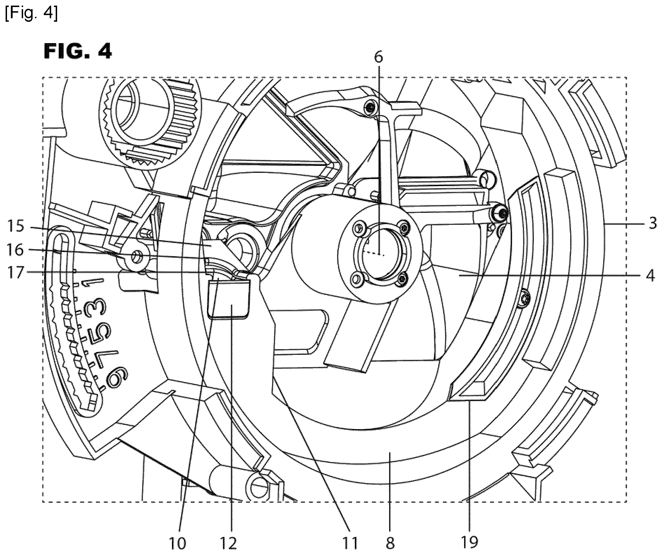

La figure 4 est une vue de détail de l'intérieur du dispositif de distribution (1). Le disque (5) a été enlevé pour permettre de voir l'arrivée (4) de graines dans le boitier (3). Elle assure le transfert des graines depuis la trémie à graines (20A) vers la réserve (8) située en fond de boitier (3). Durant le fonctionnement du dispositif de distribution (1), les graines sont transportées depuis la réserve (8) le long d'un parcours circulaire formé par la rotation du disque (5). Une différence de pression (positive ou négative) de part et d'autre du disque (5) permet aux graines de se loger sur les perforations prévues sur le disque (5) et d'être transportées jusqu'à l'entrée (10) du tube de sortie (7). La différence de pression peut être générée par une source d'air telle qu'une turbine entraînée hydrauliquement et montée sur la machine agricole (2). Cette source d'air est ensuite reliée à chaque dispositif de distribution (1) via une ou plusieurs conduite(s) dédiée(s).

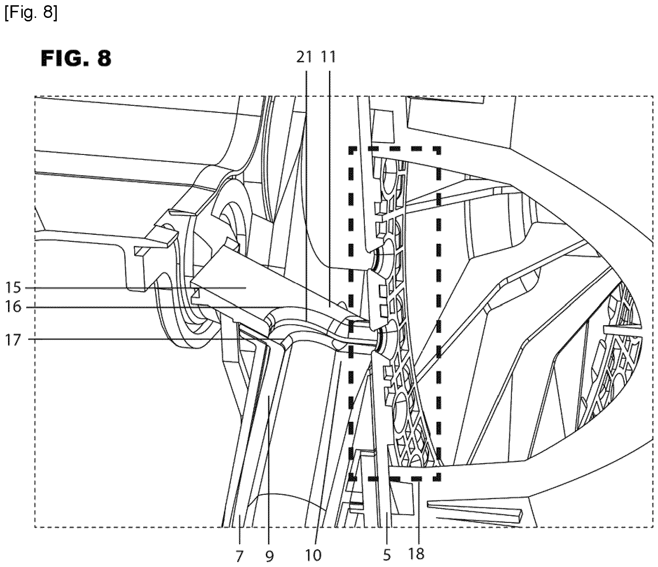

La figure 8 est une vue en coupe du dispositif de distribution (1). Elle permet de visualiser l'étape de transfert des graines depuis le disque (5) vers le tube de sortie (7). Cette étape a lieu dans une zone de sortie (18) du dispositif de distribution (1). Les graines quittent le disque (5) en rotation grâce à un moyen d'interruption de la différence de pression (non représenté). Le moyen d'interruption peut prendre la forme d'une roue lisse montée dans le boitier (3) et plaquée contre le disque (5). Le moyen d'interruption permet d'interrompre la différence de pression entre les deux côtés du disque (5) et ainsi de faire tomber les graines dans le tube de sortie (7). Grâce à ce moyen d'interruption, les graines quittent le disque (5) toujours au même endroit, de préférence au-dessus de l'entrée du tube de sortie (7). D'autres moyens d'interruption de la différence de pression sont envisageables, tels qu'un patin ou une roue à picots plaqué(e) contre le disque (5).

Une fois que les graines quittent le disque (5) après l'interruption de la différence de pression, elles rejoignent le tube de sortie (7) via son entrée (10). Une première portion (9) du tube de sortie (7) se trouve à l'intérieur du boitier (3) et est orientée de sorte que l'entrée (10) soit adjacente au disque (5). L'avantage de la position de l'entrée (10) par rapport au disque (5) est qu'elle assure un transfert efficace des graines dans l'entrée (10), après qu'elles aient quitté le disque (5). Plus l'entrée (10) du tube de sortie (7) est proche du disque (5), plus le risque que les graines ne rentrent pas dans le tube (7) après avoir quitté le disque (5) est réduit. La proximité de l'entrée (10) avec le disque (5), notamment du point d'éjection de la graine, assure un transfert direct de la graine dans le tube de sortie (7) et dans le sillon, pour obtenir un semis précis et régulier.

La trajectoire et la vitesse de sortie des graines après le disque (5) sont cruciales pour assurer la régularité du semis. L'emplacement de l'entrée (10) du tube de sortie (7) permet de mieux maîtriser le flux de produit en sortie de disque (5). Les graines sortant du disque sont canalisées dans le tube de sortie (7) après être passées par l'entrée (10). Plus le flux de produit est maitrisé, plus le semis sera régulier et précis, en garantissant un espacement constant des graines dans le sillon.

Selon une caractéristique importante de l'invention, le dispositif de distribution (1) comporte un élément de carénage (11) dans lequel est ménagée une première ouverture (21) s'étendant selon un premier plan de carénage (23), et l'élément de carénage (11) recouvre au moins partiellement la première portion (9) du tube de sortie (7). Grâce à l'élément de carénage (11) qui recouvre l'espace autour de l'entrée (10), les graines sont guidées directement vers le tube de sortie (7) et par conséquent, la précision de l'opération de semis est assurée. D'autre part, si la graine ne devait pas atteindre l'entrée (10) du tube de sortie (7), elle rejoindrait directement la réserve (8) et pourrait être réutilisée sans être détériorée. En effet, les graines qui retombent dans la réserve (8) ne se retrouvent pas coincées dans un espace situé autour du tube de sortie (7), car cet espace est comblé par l'élément de carénage (11). Les graines glissent aisément et sans obstacle vers la réserve (8), ce qui garantit qu'elles puissent à nouveau être utilisées plus tard par le dispositif de distribution (1). La combinaison de l'emplacement de l'entrée (10) du tube de sortie (7) à proximité du disque (5) et de celle de l'élément de carénage (11) autour de la première portion (9) du tube de sortie (7) améliore la régularité du flux de graines au sein du dispositif de distribution (1).

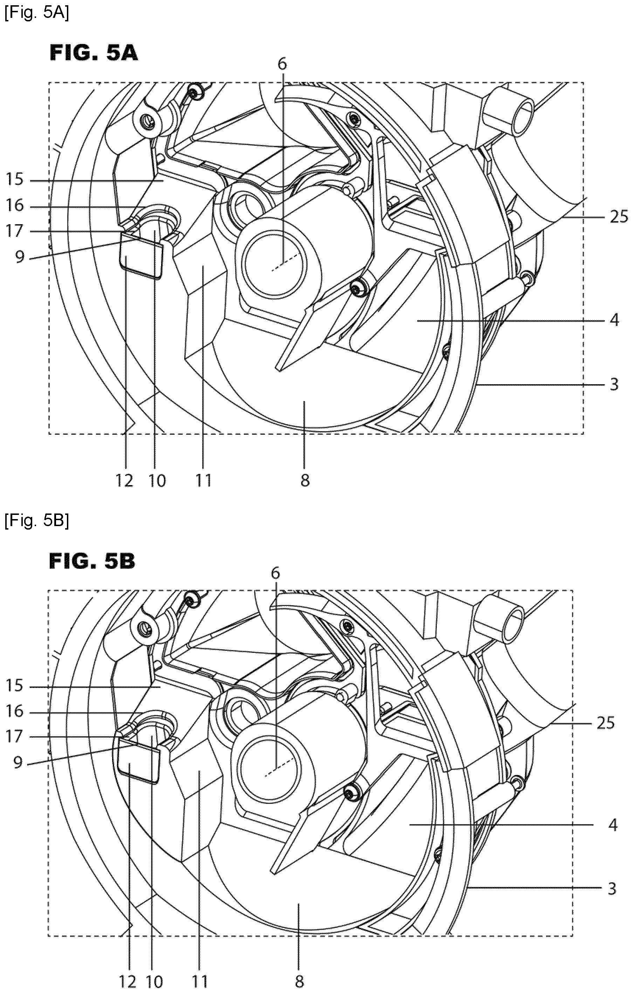

La figure 5A est une vue similaire à la figure 4, selon une autre orientation. Cette figure illustre plus particulièrement la partie interne du dispositif de distribution (1) et notamment l'élément de carénage (11). Grâce à cet élément de carénage (11), les flux de pression et de graines à l'intérieur du boitier (3) sont mieux maîtrisés. L'élément de carénage (11) permet de guider les graines vers l'entrée (10) du tube de sortie (7). Dans certains cas, l'élément de carénage (11) guide les graines directement vers la réserve (8), si les graines n'atteignent pas l'entrée (10). Avec l'élément de carénage (11), les graines ne se retrouvent pas coincées ou abîmées, puisqu'elles sont transférées directement vers la réserve (8). Le risque que des graines qui n'arrivent pas à atteindre l'entrée (10) soient coincées dans le boitier (3) ou abîmées est grandement réduit, voir totalement éliminé.

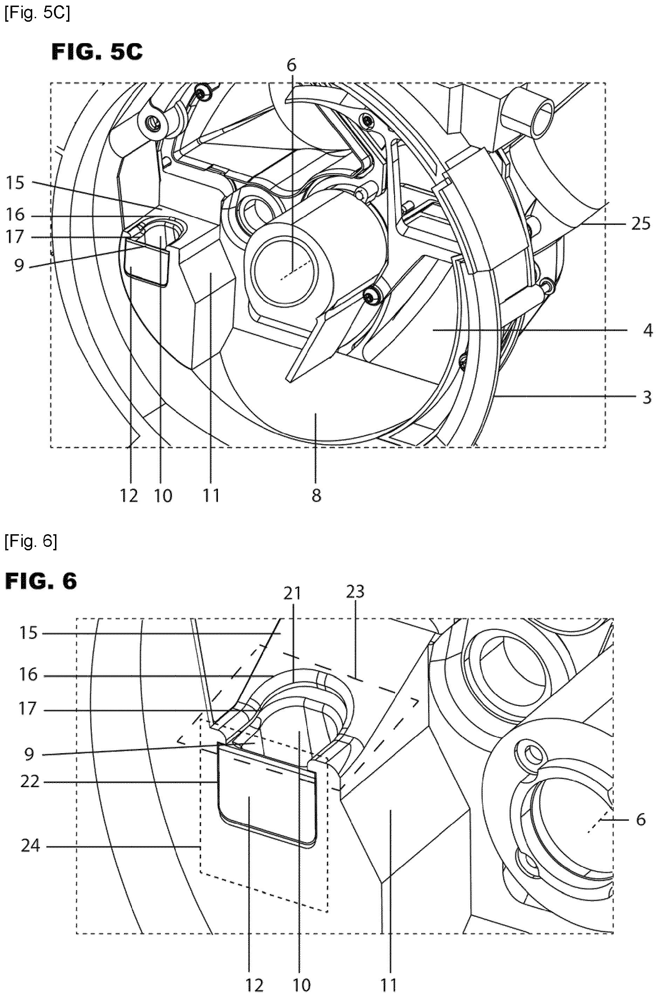

La figure 6 illustre plus en détail l'élément de carénage (11) qui recouvre la première portion (9) du tube de sortie (7). L'élément de carénage (11) est par exemple une enveloppe profilée qui est destinée à recouvrir la première portion (9). Une première ouverture (21) est ménagée dans l'élément de carénage (11) et orientée selon le premier plan de carénage (23). La première ouverture (21) est au moins alignée avec l'entrée (10) du tube (7) et autorise le passage des graines dans le tube de sortie (7), tout en permettant à l'élément de carénage (11) de recouvrir la première portion (9) du tube (7).

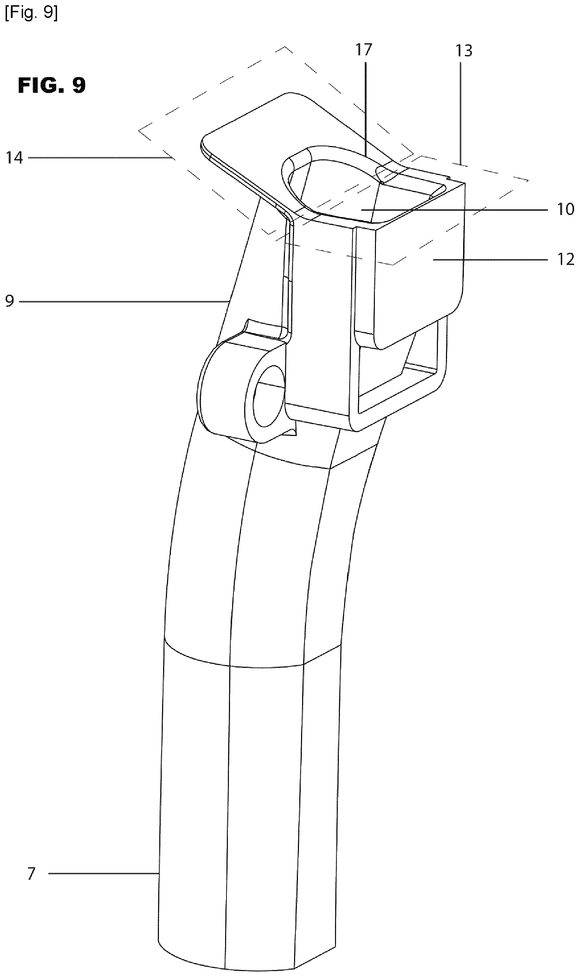

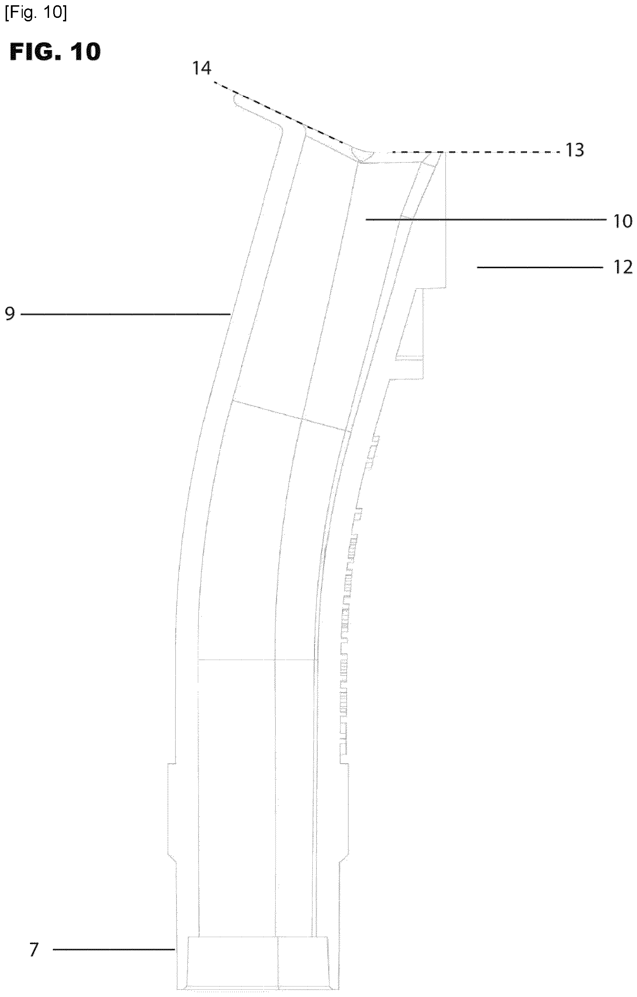

La courbure et les formes générales du tube de sortie (7) sont visibles en détail sur les figures 9 et 10. L'orientation angulaire du tube de sortie (7) est prévue de sorte que les graines qui rentrent par l'entrée (10) heurtent le moins possible la paroi interne du tube de sortie (7). Limiter le nombre de rebonds des graines pendant leur traversée du tube de sortie (7) permet de mieux maîtriser leur espacement et leur régularité au moment où elles sortiront du tube de sortie (7) pour aller dans le sol. De même, une maîtrise de la trajectoire de traversée du tube par les graines permet aussi de mieux connaître leur vitesse durant leur transport. De ce fait, la partie supérieure du tube de sortie (7) est inclinée, à la fois pour que l'entrée (10) soit au plus proche du disque (5) et de la zone de sortie (18), mais aussi pour que les graines qui rentrent dans le tube subissent le moins de chocs et/ou de rebonds dans la suite de leur parcours. Avantageusement, l'inclinaison de la partie supérieure du tube (7) est réalisée grâce à une courbure par rapport à l'axe principal du tube (7). Préférentiellement, l'angle de cette courbure est compris entre 5 et 15° par rapport à l'axe principal du tube (7). Le tube de sortie (7) présente une forme générale cylindrique, mais d'autres profils (non représentés) sont envisageables, par exemple une forme de triangle, afin de guider les graines avec un effet de goulotte. De la même manière, différents diamètres de tubes de sortie (7) sont possibles, notamment en fonction des variations de tailles de graines selon les plantes et/ou les variétés à semer.

La première portion (9) du tube de sortie (7) se trouve à l'intérieur du boitier (3). La première portion (9) fait partie intégrante du tube de sortie (7) comme représenté sur les figures 9 et 10. Comme visible sur les figures 5A, 5B, 5C, 6 et 8, l'élément de carénage (11) recouvre la première portion (9) du tube de sortie (7). Cette caractéristique a pour avantage de ne pas laisser dépasser le tube de sortie (7) seul et donc sans élément de carénage (11) à l'intérieur du boitier (3). Ceci permet à l'élément de carénage (11) de guider les flux de pression et de graines à l'intérieur du boitier (3), sans qu'une excroissance du tube de sortie (7) ne forme un obstacle. Les flux de pression guidés par l'élément de carénage (11) sont ainsi dépourvus de turbulence du fait des formes de l'élément de carénage (11), ce qui limite la consommation en air sous pression du dispositif de distribution (1). Les graines qui ne rentreraient pas dans l'entrée (10) du tube de sortie (7) sont guidées par l'élément de carénage (11) directement vers la réserve (8) sans être détériorées, ce qui les rend à nouveau utilisables ultérieurement durant l'opération de semis.

Selon une autre variante non représentée, le tube de sortie (7) peut faire partie intégrante du boitier (3) et comprendre un insert d'une forme analogue à la première portion (9) du tube de sortie (7) décrite ci-dessus, emmanché sur le tube de sortie (7).

Selon une autre caractéristique avantageuse de l'invention visible sur la figure 6, l'élément de carénage (11) comprend une deuxième ouverture (22) s'étendant dans un second plan de carénage (24), le premier plan de carénage (23) et le second plan de carénage (24) étant sécants. De préférence, ils sont orientés selon un angle compris entre 45° et 170°. Cet angle définit en partie la forme de l'élément de carénage. De manière avantageuse, le second plan de carénage (24) est sensiblement parallèle au disque (5). La présence de la deuxième ouverture (22) orientée selon le second plan de carénage (24) a pour avantage de réduire l'usure de l'élément de carénage (11) dans le cas où il serait en contact avec le disque (5) en rotation. Une limitation de l'usure de l'élément de carénage (11) permet de limiter également la maintenance nécessaire sur le dispositif de distribution (1), ce qui a pour intérêt de réduire le nombre, la durée, la complexité et le coût des opérations de maintenance sur le dispositif de distribution (1).

Un autre avantage de l'élément de carénage (11) est qu'il permet de réduire grandement, voire d'éliminer entièrement certaines des turbulences des flux de pression au sein du dispositif de distribution (1). Grâce à l'élément de carénage (11) de l'invention, les graines éjectées du disque sont guidées vers le tube et ne subissent pas de perturbations. Les flux de pression au sein du dispositif de distribution (1) et plus particulièrement autour de l'élément de carénage (11) ne comportent pas ou très peu de turbulences, du fait de la présence de l'élément de carénage (11) autour de la première portion (9) du tube de sortie (7). Cette caractéristique permet de réduire la consommation en air du dispositif de distribution (1) et, de ce fait, requiert une source d'air (telle qu'une turbine hydraulique) moins conséquente et donc moins coûteuse.

Selon une caractéristique avantageuse de l'invention visible sur les figures 4 et 5A, l'élément de carénage (11) fait partie intégrante du boitier (3) du dispositif de distribution (1). Dans ce cas, l'élément de carénage (11) est intégré directement dans la forme du boitier (3). Cette caractéristique présente notamment des avantages pour l'industrialisation, comme par exemple une limitation du nombre de composants au sein du dispositif de distribution (1) et ainsi une limitation des coûts de production et du nombre de pièces de rechange à gérer par le fabricant.

Conformément à une autre variante de réalisation illustrée sur la figure 5B, l'élément de carénage (11) est une pièce séparée du boitier (3) du dispositif de distribution (1), l'élément de carénage (11) étant de préférence démontable du boitier (3). Une telle variante permet de démonter et de remonter de manière aisée l'élément de carénage (11) dans le cadre d'une opération de maintenance ou de nettoyage du dispositif de distribution (1).

Par ailleurs, une telle variante permet aussi à l'opérateur d'utiliser un élément de carénage (11) présentant des formes et/ou des caractéristiques différentes selon les cas d'utilisation du dispositif de distribution (1). En effet, les différents types de produits agricoles pouvant être utilisés présentent des tailles, des profils et des caractéristiques différentes, et selon la configuration du dispositif de distribution (1), il peut être avantageux d'avoir un élément de carénage (11) plus ou moins large ou étroit, droit ou courbé, afin de faciliter le flux de graines autour de l'élément de carénage (11). Il est ainsi possible d'adapter l'élément de carénage (11) au type de graines à distribuer, dans le cadre d'une opération de modification de la configuration du dispositif de distribution (1). Habituellement cette opération implique aussi de changer le disque (5) dans le but d'obtenir un fonctionnement optimal du dispositif de distribution (1).

Les figures 9 et 10 mettent en évidence une autre caractéristique avantageuse de l'invention, à savoir que l'entrée (10) est orientée selon au moins deux plans (13 ; 14) sécants. Ces deux plans (13 ; 14) sont distincts l'un de l'autre et permettent de former une entrée (10) du tube de sortie (7), qui accommode son inclinaison. Ces deux plans (13 ; 14) permettent également de favoriser l'entrée des graines dans le tube de sortie (7) par rapport à une entrée (10) qui serait inclinée selon un plan unique. Le plan (14), avantageusement situé plus haut que le plan (13), permet de canaliser efficacement les graines qui peuvent avoir une trajectoire de sortie orientée vers le haut, tandis que le plan (13) permet à l'entrée (10) d'être proche du disque (5). De manière avantageuse les deux plans (13 ;14) sont orientés selon un angle compris entre 120° et 170°, idéalement entre 150° et 160°. Le plan (13) est avantageusement sensiblement horizontal et perpendiculaire au disque (5).

Selon une autre caractéristique avantageuse de l'invention, visible entre autres sur les figures 5A, 6 et 8, l'élément de carénage (11) comporte au moins une face supérieure (15) sensiblement parallèle et/ou coplanaire avec l'un des plans (13 ; 14). Cette caractéristique permet à l'élément de carénage (11) d'épouser au mieux les formes de la première portion (9) du tube de sortie (7), et en particulier de l'entrée (10). Ainsi la gestion des flux de pression et de graines au sein du dispositif de distribution (1) est améliorée, comme décrit précédemment.

La face supérieure (15) de l'élément de carénage (11) permet de guider les graines vers l'entrée (10) du tube de sortie (7). Les autres faces de l'élément de carénage (11) sont orientées pour faciliter l'écoulement des graines qui ne sont pas rentrées dans le tube de sortie (7) vers la réserve (8). Comme la réserve (8) se trouve plus bas que l'entrée (10) du tube de sortie (7) au sein du boitier (3), l'élément de carénage (11) comprend au moins une face orientée substantivement à la verticale pour former une rampe d'écoulement des graines vers la réserve (8), dans le cas où elles ne rentrent pas dans l'entrée (10).

Tous ou certains des angles entre les différentes faces de l'élément de carénage (11) et le boitier (3) sont obtus afin de faciliter l'écoulement des graines vers l'entrée (10) ou vers la réserve (8), tout en évitant de former des cavités ou recoins où les graines pourraient rester coincées.

Toutes ou certaines des arêtes entre les différentes faces de l'élément de carénage (11) peuvent être de forme arrondie ou présenter des chanfreins. Grâce à ces arêtes arrondies ou chanfreins, le passage des graines sur les surfaces de l'élément de carénage (11) se fait sans chocs et de manière plus aisée, ce qui permet de conserver leur intégrité et de ne pas les endommager.

L'élément de carénage (11) peut comporter en outre différentes faces qui permettent d'épouser au mieux les formes de la première portion (9) du tube de sortie (7). Ces faces peuvent être planes, comme visible entre autres sur les figures 5A, 5B, 6 et 8.

Selon une autre variante de réalisation non représentée, certaines ou toutes les faces de l'élément de carénage (11) peuvent être incurvées, afin de former des surfaces arrondies, concaves et/ou convexes.

Conformément à une autre variante de réalisation illustrée sur la figure 5C, il est possible que l'entrée (10) du tube de sortie (7) soit orientée selon un plan (13) unique. De même, selon cette variante, l'élément de carénage (11) comporte une face supérieure (15) sensiblement parallèle et/ou coplanaire au plan (13).

Selon une autre caractéristique avantageuse de l'invention, visible notamment sur les figures 5A, 6, et 8, l'élément de carénage (11) comporte une arête arrondie et/ou un chanfrein (16) adjacent(e) à au moins une partie de la circonférence de l'entrée (10). Cette caractéristique permet de faciliter l'accès des graines dans l'entrée (10), tout en évitant de les détériorer. De manière avantageuse, l'arête arrondie et/ou le chanfrein (16) est adjacent à la première ouverture (21) de l'élément de carénage (11) et est opposé à la seconde ouverture (22) de l'élément de carénage (11). De cette manière, la rotation du disque (5) n'usera pas l'arête arrondie et/ou le chanfrein (16).

Selon une autre caractéristique avantageuse de l'invention, visible entre autres sur les figures 8 à 10, au moins une partie de la circonférence de l'entrée (10) du tube de sortie (7) comporte une arête arrondie et/ou un chanfrein (17). Cette caractéristique, seule ou combinée à celle décrite dans le paragraphe précédent, permet également de faciliter l'accès des graines dans l'entrée (10) sans les détériorer. De manière avantageuse, l'arête arrondie et/ou le chanfrein (17) est opposé(e) au côté (12) de la première portion (9) du tube de sortie (7). De cette manière, la rotation du disque (5) n'usera pas l'arête arrondie et/ou le chanfrein (17).

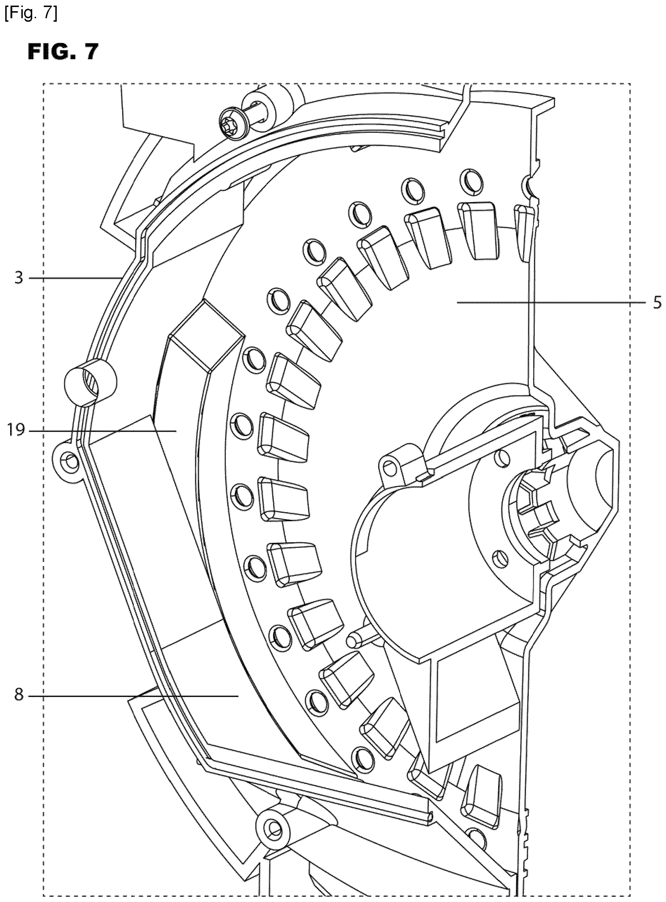

La figure 7 représente une vue en perspective du dispositif de distribution (1), avec le boitier (3) et le disque (5), permettant de voir le côté opposé du disque (5), c'est-à-dire le côté où les graines viennent en prise sur les perforations du disque (5). Le boitier (3) comprend une lame (19) montée sur ou faisant partie intégrante du boitier (3). La lame (19) a pour but de faciliter la prise des graines sur le disque (5), en évitant leur colmatage et/ou agglomération sur les perforations du disque (5). La lame (19) dispose ici d'une forme arquée se rapprochant progressivement du bord des perforations au fur et à mesure de la progression du parcours circulaire des graines et donc des perforations du disque (5) en rotation. Grâce à cette forme particulière, la lame (19) empêche que plusieurs graines ne viennent s'agglomérer sur une même perforation et former un doublon lors du semis. Les doublons sont à éviter, car ils impliquent que deux graines se trouvent à la même position dans le sillon au moment du semis. La lame (19) est située à proximité du disque (5) ou peut être en contact avec le disque (5) pour une efficacité maximale. De plus, la lame (19) est positionnée de sorte à débuter au niveau de la réserve (8) de graines, c'est-à-dire à proximité du fond du boitier (3). De manière avantageuse, la lame (19) est positionnée de manière à débuter dans une moitié inférieure de l'encombrement du disque (5). De manière avantageuse, la lame (19) est positionnée de manière à s'arrêter dans une moitié supérieure de l'encombrement du disque (5). Cette position et la forme de la lame (19) permettent d'éviter un colmatage ou une agglomération des graines entre elles quand elles sont en attente de la rotation du disque (5) dans la réserve (8) et quand elles viendront en prise sur les perforations du disque (5).

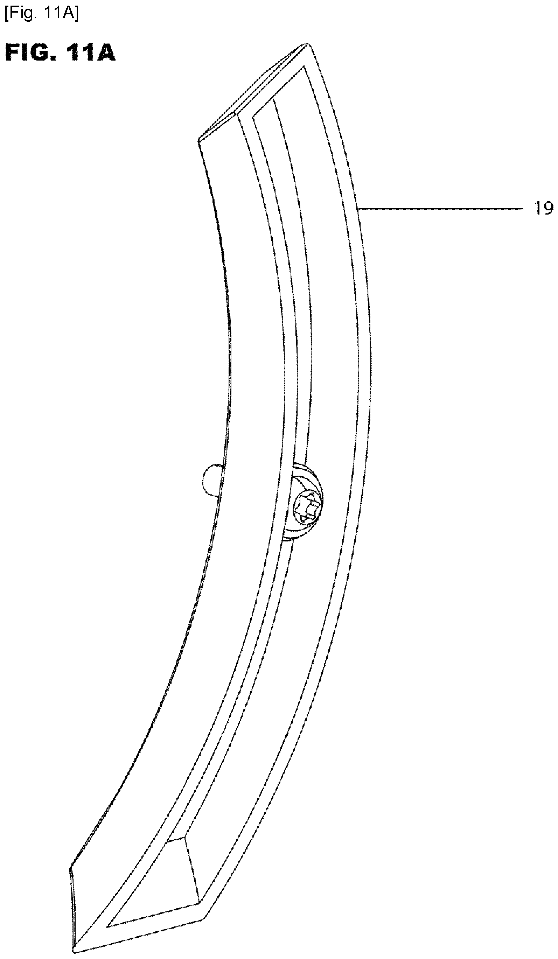

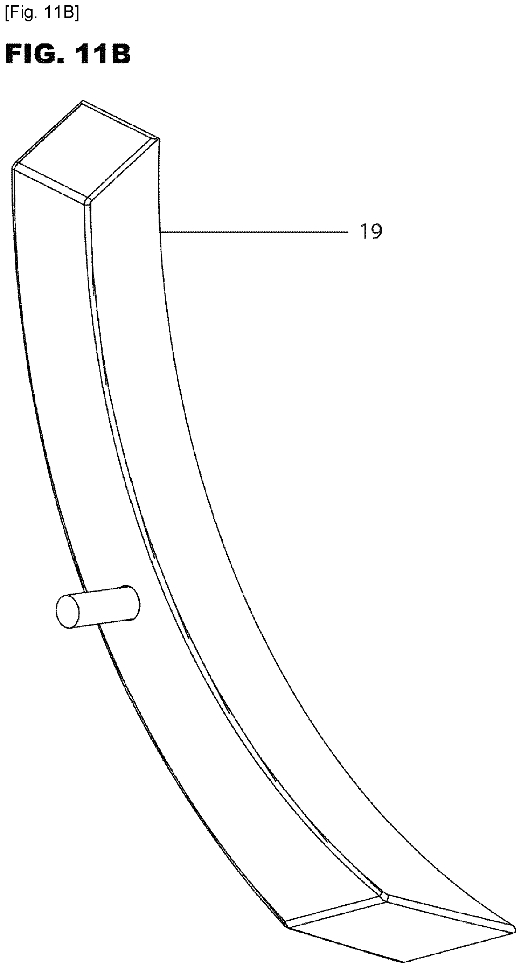

Les figures 11A et 11B montrent des vues de la lame (19) seule, selon deux orientations. Comme illustré sur ces figures, la lame (19) peut disposer d'au moins un moyen de fixation démontable permettant de la démonter et de la remonter aisément dans le boitier (3). Ce moyen de fixation démontable peut-être une ou plusieurs vis et/ou un ou plusieurs clips de fixation, ainsi que d'autres variantes connues dans le domaine de la construction mécanique. Une fixation démontable de la lame (19) permet d'envisager une gamme de plusieurs lames (19) remplaçables selon l'utilisation du dispositif de distribution (1). En effet, différents types de produits agricoles présentant différentes caractéristiques (dimensions, forme, adhérence, etc.) peuvent nécessiter des formes adaptées de la lame (19) pour une efficacité optimale. Ces formes adaptées sont par exemple un rayon de courbure de la lame (19) plus ou moins important, une courbure plus ou moins progressive entre ses deux extrémités (par exemple avec un rayon de courbure qui varie entre les deux extrémités), les dimensions générales de la lame (hauteur, largeur, épaisseur, etc.), un nombre de perforations du disque (5) affectées par la lame (19) sur le parcours circulaire des graines, etc.

La figure 12 représente une machine agricole (2) permettant d'accueillir au moins un dispositif de distribution (1) présentant les caractéristiques avantageuses décrites ci-dessus. Il s'agit dans le cas présent d'un semoir de précision, aussi appelé semoir monograine. Sur la figure 12, il s'agit d'un semoir avec six éléments semeurs du type monograine. Chaque élément semeur est équipé d'au moins un dispositif de distribution (1) disposé entre la trémie à graines et des éléments de travail du sol et/ou de semis qui sont en contact avec le sol.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de distribution (1) de graines pour une machine agricole (2) telle qu'un semoir monograine, le dispositif de distribution (1) comprenant un boitier (3), une arrivée (4) de graines aménagée dans le boitier (3), un disque (5) perforé et entraîné pour transporter les graines le long d'un parcours circulaire, un tube de sortie (7) transportant les graines depuis le boitier (3) vers un sillon d'une parcelle agricole, les graines étant transportées depuis une réserve (8) située dans le boitier (3) vers le tube de sortie (7) à l'aide d'une différence de pression d'air de part et d'autre du disque (5), la différence de pression d'air étant interrompue dans une zone de sortie (18) à proximité du tube de sortie (7), de façon à ce que les graines quittent le disque (5) pour rejoindre le tube de sortie (7), le tube de sortie (7) comprenant une première portion (9) dans laquelle rentrent les graines via une entrée (10), cette première portion (9) du tube de sortie (7) se trouvant à l'intérieur du boitier (3) et étant orientée de sorte que l'entrée (10) soit adjacente au disque (5), **caractérisé en ce que** le dispositif de distribution (1) comporte un élément de carénage (11) dans lequel est ménagée une première ouverture (21) s'étendant selon un premier plan de carénage (23), et **en ce que** l'élément de carénage (11) recouvre au moins partiellement la première portion (9) du tube de sortie (7).

2. Dispositif de distribution selon la revendication 1, **caractérisé en ce que** l'élément de carénage (11) comprend une deuxième ouverture (22) s'étendant selon un second plan de carénage (24), le premier plan de carénage (23) et le second plan de carénage (24) étant sécants.

3. Dispositif de distribution selon l'une des revendications précédentes, **caractérisé en ce que** l'élément de carénage (11) fait partie intégrante du boitier (3) du dispositif de distribution (1).

4. Dispositif de distribution selon la revendication 1 ou 2, **caractérisé en ce que** l'élément de carénage (11) est une pièce séparée du boitier (3) du dispositif de distribution (1), l'élément de carénage (11) étant de préférence démontable du boitier (3).

5. Dispositif de distribution selon l'une des revendications précédentes, **caractérisé en ce que** l'entrée (10) est orientée selon au moins deux plans (13 ; 14) sécants.

6. Dispositif de distribution selon la revendication 5, **caractérisé en ce que** l'élément de carénage (11) comporte au moins une face supérieure (15) sensiblement parallèle et/ou coplanaire avec l'un des plans (13 ; 14).

7. Dispositif de distribution selon l'une des revendications précédentes, **caractérisé en ce que** l'élément de carénage (11) comporte une arête arrondie et/ou un chanfrein (16) adjacent(e) à au moins une partie de la circonférence de l'entrée (10).

8. Dispositif de distribution selon l'une des revendications précédentes, **caractérisé en ce qu'**au moins une partie de la circonférence de l'entrée (10) du tube de sortie (7) comporte une arête arrondie et/ou un chanfrein (17).

9. Machine agricole (2) comprenant un dispositif de distribution (1) selon l'une quelconque des revendications précédentes. 1
